# EUROPEAN PATENT APPLICATION

(11) **EP 2 526 780 A2**
(43) Date of publication of application: **28.11.2012**
(21) Application number: 12075092.2
(22) Date of filing: 01.04.2010
(51) Int. Cl.: A23G 1/18, A23G 1/00

(54) **Apparatus for continuous tempering of chocolate mass**

(62) Divisional of application: 10075152.8
(71) Applicant: Aasted ApS, 3520 Farum (DK)
(72) Inventor: Holmud, Dennis, 2860 Søborg (DK); Haslund, Henning, 4632 Bjaeverskov (DK)
(74) Representative: Heiden, Finn

(57) **Abstract**

Apparatus (1) for continuous tempering of a fat-containing, crystallisable chocolate mass, which has been heated, so that it is liquid, pumpable and free from crystals. The apparatus comprises a branching means (5) adapted for dividing the mass into a first stream of mass (9) and a second stream of mass (6), so that the amount of the first stream of mass is smaller than the amount of the second stream of mass. Cooling means (8, 11) is adapted for cooling of the mass, so that crystals are created in the first stream of mass during a period of more than 100 seconds, and so that the second stream of mass is still being essentially free from crystals. Furthermore is mixing means (14) adapted for mixing the first stream of mass and the second stream of mass together into one final crystallised stream of mass.

Hereby is provided an apparatus by which is produced chocolate with the highest quality and furthermore with severe energy-savings up to 70%. The apparatus is around 30% smaller in size and the weight is reduced 50%.

## Description

The present invention concerns a method as well as an apparatus for continuous tempering of fat-containing, crystallisable chocolate mass, which has been heated, so that it is liquid, pumpable and essentially free from crystals.

Generally, the chocolate mass that is continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C, depending on the chocolate type. The mass and the heat-exchanging surfaces of the crystallisation stage is so cold, that crystals are created in the mass. The cooling water temperature is generally set to 10-14°C. According to several read outs of surface temperature measurements, the temperature of the cooling surfaces is between 0,5°C and 2°C higher than the temperature of the cooling water. The approximate temperature of the heat-exchanging surfaces of the crystallisation stage is always below 18°C, so that crystal creation ("impfning") is performed at the cooling surfaces and not in the mass. The time period is typically calculated to around 40 seconds for the chocolate mass to pass through the crystallisation stage. For a particular size of a tempering machine, the time period for the mass to pass through the crystallisation stage is then between 30 seconds and lower than 50 seconds.

Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.

Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.
When high fat recipes having fat content between 40% and 100% are tempered, the maximum capacity is lowered up to 50%.
A major disadvantage is then a very high energy consumption, firstly for cooling down the total mass and secondly for reheating the mass. Also the energy requirements are high for the chocolate pumps and the gear motors of the tempering machines. Tempering machines with a capacity of more than 5000 kg/hour are very big in size, have a very high weight and are consequently very difficult and cumbersome to handle.

EP 1616487 A1 (Sollich) discloses a tempering apparatus by which already tempered mass is recirculated to the mixing or conditioning stage or to the crystallisation stage for upgrading the concentration of crystals in the mass. However the crystal content may be difficult to control exactly to a desired level.

EP 1180941 A1 discloses a method and an apparatus by which a seed suspension having a content of beta VI crystals is prepared by use of a high shear crystalliser, with or without the addition of crystal powder. The seed suspension is subsequently mixed in a content of 0,01% - 0,2% with a main stream of a crystal free mass such as for example a filling mass with a content of oils derived from nuts. The challenge of this prior method and apparatus seems to be, that the mixing has to be very intensive and thoroughly for the resultant mass to be sufficiently homogenous. Also the method is very time consuming as it takes at least 11/2-2 hours for the seed suspension to be created and the equipment is expensive. Furthermore, is the added seed powder very expensive as it is based on cocoa butter-fat.

According to the method of the present invention the mass is divided into a first stream of mass and a second stream of mass. The amount of the first stream of mass is smaller than the amount of the second stream of mass, which mass is cooled, so that crystals are created in the first stream of mass during a period of more than 100 seconds, and so that the second stream of mass is still being essentially free from crystals. There after the first stream of mass and the second stream of mass is being mixed together into one final crystallised stream of mass.

The amount of the first stream of mass is smaller than the amount of the second stream of mass and crystals are created in the first stream of mass during a period of more than 100 seconds, and so that the second stream of mass is still being essentially free from crystals. By only crystallising less than half of the mass, however during a severely prolonged time period of more than 100 seconds before mixing, makes it possible to increase the capacity in kg/hour of a given size of a tempering apparatus with up to 200%. The capacity could for example be increased from 1000 kg/hour and up to 3000 kg/hour. Hereby is also achieved the benefit, that when applying the method according to the invention, the physical size of a given tempering machine could be reduced with approximately 30% for delivering the same amount of tempered chocolate per hour. This is especially an advantage, when the tempering apparatus comprises a column and has a high capacity, such as over 1000 kg/hour. Then, the height of the tempering column is reduced up to approximately 30%, for example from 4,0 Meters in height and to under 3,0 Meters in height. For tempering machines having a capacity of tempered chocolate of more than 7500 kg/hour the advantage is especially great. These prior art tempering machines are so big that they are very difficult to handle, to transport and to install. Typically, the only practical solution is to transport the machines with the column in horizontal position and then raise it to vertical at the customers factory during installation. With the inventive solution this is not necessary any longer, instead the height and the gravity of weight of the machines are lowered so much that they can be handled in upright position. The weight of the machines are also reduced severely with the inventive solution as the weight is reduced up to 50%. As the demand from the market for tempering apparatus having capacity over 5000 kg/hour is increasing the inventive solution has a great value. Also it is now possible to manufacture, handle and install tempering columns having a capacity over 10.000 kg/hour as their size and especially height as well as weight are severely reduced.

The first stream of mass is effectively cooled and crystallised. During the subsequent mixing of the first and the second stream of mass, the crystals are effectively and homogenously spread out in the final stream of mass. The result is tempered chocolate mass of astonishing high quality.

This is due to the fact, that the smaller amount of mass is given a severe prolonging to over 100 seconds at crystallisation conditions. Potentially, in-stable crystals are only created in the first stream of mass being crystallised, which is less than half of the total amount of mass. At the same time, the much prolonged residence time available for the crystals to perform and grow in the crystallisation stage, i.e. over 100 seconds, ensures that a great amount of βV-crystals are created. When the first and the second stream are mixed the result is controlled by taking out samples from the mass and testing with DSC-curves.

Hereby is provided a method, which produces tempered chocolate with highest possible quality. The severely prolonged crystallisation period for less than half of the total amount of mass ensures, that the created crystals has much more time available to develop and mature in the mass, than by the prior art. Thereby, they give rise to an accelerated crystal initiation in the remaining part of the mass so that a synergy effect is provided. It is especially advantageous when tempering chocolate having high fat content such as milk chocolate, nougat and white chocolate.

Important to notice is, that the method according to the present invention avoids use of any additional substance, such as expensive seed materials of cocoa butter. Neither is already crystallised mass re-circulated for upgrading of the mass or achieving higher concentration of crystals in the mass.

The temperature of the second stream of mass is kept 4-7°C higher than the lowest achievable temperature of the first stream of mass, when it is being crystallised. Thereby, the second stream of mass is cooled to the lowest possible temperature without creating crystals. Consequently is avoided any cooling amount for creating crystals in the second stream of mass. The total amount of cooling energy required for tempering of the mass is then lower than by the prior tempering process. The total energy requirements for providing continuously tempered chocolate mass is lowered up to 70% for common chocolate recipes such as dark chocolate, milk chocolate and nougat.

The second stream of mass is kept at a constant temperature immediately before mixing. The temperature must be low enough for the crystals in the first stream not to be re-melted and high enough for undesirable crystallisation not to be performed before and during mixing. The temperature is typically between 29 and 35°C, primarily 30-33°C, however is dependent of the particular mass.

When the period of creating crystals in the first stream of mass is greater than 100 seconds and the surface temperature of the cooling surfaces is raised to above 19 °C an especially advantageous effect is obtained. Then, the crystals are created in the mass and not at the cooling surfaces as by the prior art. At surface temperatures below 18°C a solid layer of crystals are continuously created at the surfaces of the crystallisation stage. This layer severely reduces the heat-exchange capacity between the chocolate and the cooling water. When the temperature of the cooling surfaces are above 19 °C the layer is melted up, the heat exchange capacity raises and crystals are created to a higher extent in the mass than at the surfaces. Essential is then, that creation of undesirable in-stable crystals such as Beta IV, Alpha and Gamma crystals are diminished. The re-heating as by the prior art for re-melting these crystals is also unnecessary. A severe quality improvement is then achieved, as the presence of crystals which potentially shortens the shelf-life of the solidified chocolate product is avoided. This effect is especially advantageous for chocolate types having high fat content such as milk chocolate and nougat.

The complete mass may be cooled before it is divided. Then it is not necessary to cool down the biggest second stream of mass further before the mixing of it with the first stream of mass. Decisive is however, that the temperature of the second stream of mass is so low, that the stable beta crystals created are not melted up again during the mixing. The second stream of mass may also be cooled separately, so that the cooling thereof is independent of the first stream of mass.

When the amount of the first stream of mass is between 5% and 40% of the amount of the final stream of mass, then is obtained the lowest possible energy consumption for performing the continuous tempering according to the invention. The small amount of crystallised mass, i.e. between 5% and 40% is effectively spread out in the second stream of mass during the mixing therewith. Surprisingly, the crystals in a short time such as 10-20 seconds give rise to accelerated crystallisation in the remaining un-crystallised mass. Thereby, is achieved a synergy effect. On basis of the very low energy requirement for cooling and crystallising the small amount of crystals in the first stream of mass, is obtained a "initiating" effect for the remaining part of the mass without the addition of further cooling energy.

When the mass to be continuously tempered is dark chocolate, milk chocolate, nougat or other chocolate with a fat content between 30% and 40 % the energy savings are especially great. When tempering milk chocolate the savings are as high as up to 70% in comparison with a traditional tempering apparatus.

The invention also relates to an apparatus for continuous tempering of a fat-containing, crystallisable chocolate mass, which has been heated, so that it is liquid, pump able and free from crystals.

According to the invention, the apparatus comprises a branching means adapted for dividing the mass into a first stream of mass and a second stream of mass, cooling means adapted for cooling of the mass, so that crystals are created in the first stream of mass, and so that the second stream of mass is still being essentially free from crystals, and mixing means adapted for mixing the first stream of mass and the second stream of mass together into one final crystallised stream of mass.

The apparatus configuration makes it possible to crystallise only a smaller part of the total mass. The necessary cooling energy is then lowered as well as the energy requirements for electric gear motor and chocolate pumps. The cooling surfaces of the tempering apparatus is lesser than of that by the prior art machines for producing the same total amount of crystallised mass. The total energy requirements for the complete apparatus is then also lowered in comparison with the prior art machines for producing the same amount of tempered mass. The inventive apparatus can then be produced smaller in size. A very high desirable quality with diminishing content of in-stable crystals is achievable without using any "seed" technique by which expensive cocoa butter has to be crystallised separately and added to the particular mass.

It is especially advantageous when the apparatus is adapted to divide between 5% to 40% of the total mass into the first stream of mass and the rest into the second stream of mass. Then, the appropriate size of cooling surfaces and cooling capacity in the crystallisation stage is much lesser than when 100% of mass has to be crystallised. The apparatus may then be made especially small and the energy consumption is lowered severely for the apparatus, i.e. up to 70%.

Tests has shown, that when the amount of the first stream of mass is between 10% and 30% of the amount of the final stream of mass, the highest possible capacity of mass is achieved for a fixed configuration of an apparatus. The energy savings are also among the greatest. The consumed energy is measured to between 7,7 W/Kg/hour and 9,2 W/Kg/hour tempered dark chocolate mass or milk chocolate mass. The maximum tempered amount was between 1400 kg and 1800 kg per hour.

A great advantage is also, that all the equipment of the apparatus is well-known components. For example may the tempering unit, the tanks, and the mixers be of known types commercially available at the market.

The invention is further described by referring to the drawing, in which
figure 1 schematically discloses an apparatus configuration for carrying out the method according to the invention,
figure 2 schematically discloses another configuration according to figure 1,
figure 3 schematically discloses an apparatus according to the invention for carrying out the method of the invention,
figure 4 another embodiment of figure 3,
figure 5 discloses schematically in vertical section one embodiment of the inner chambers of the apparatus of figure 3 or 4,
figure 6 discloses schematically another embodiment of the inner chambers according to figure5, and
figure 7 discloses curves of mass temperatures.

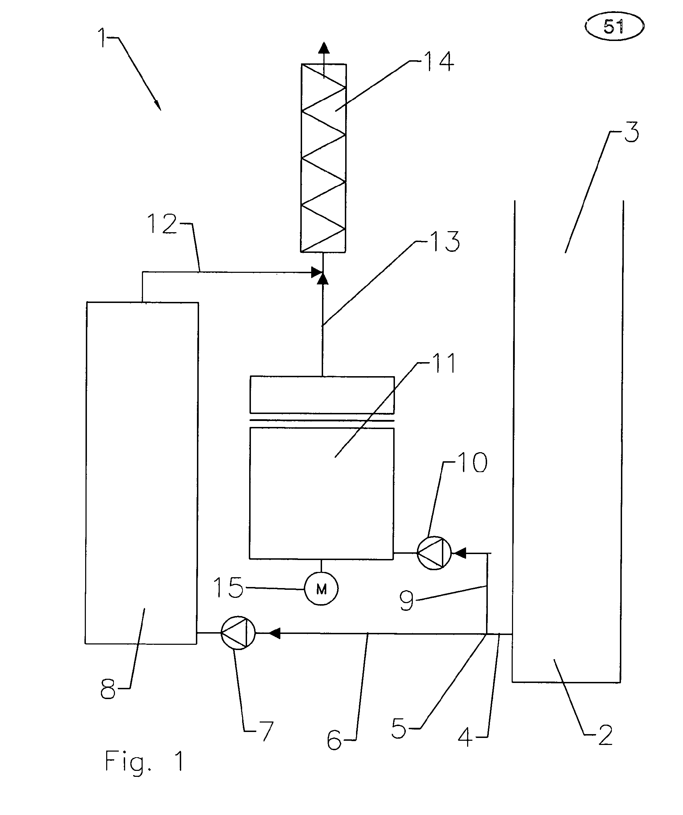

The apparatus 1 in figure 1 is configured for carrying out the method according to the invention. The apparatus 1 comprises a holding tank 2 for the chocolate mass 3 to be continuously tempered. A tube 4 connects the tank 2 with a branch 5. A tube 6 connects the branch 5 with a pump 7 connected to a heat exchanger or cooler 8. A further tube 9 connects the branch 5 with a further pump 10, which is connected to a cooling or tempering device 11. The cooler 8 is connected via a tube 12 with a static mixer 14. The tempering device 11 is connected with the static mixer 14 via a tube 13. The tempering device could be of any usual known type available on the commercial market as long as it is capable of creating crystals in the first stream of the mass. The tempering device is usually equipped with internal stirring tools mounted on a longitudinal shaft driven by a motor 15.

The chocolate mass in the tank 2 is heated to a temperature interval of 40-50°C. A first stream of mass is pumped via the pump 10 continuously through the tempering column 11 and via the tube 13 to the static mixer 14. A second stream of mass is pumped via the pump 7 through the cooler 8 and further via the tube 12 to the static mixer 14.

The amount of the first stream of mass is smaller than the amount of the second stream of mass. In the cooler 8 the second stream of mass is cooled from 40-50°C to between 29-35°C depending on the particular mass in question. Important is, that the mass of the second stream achieves a temperature, so that it is still free from crystals immediately before mixing with the first stream of mass. Then, crystals created in the first stream of mass must be able to survive when the two streams are mixed in the mixer 14. This means, that the temperature of the second stream of mass is typically 29-32°C for milk chocolate, white chocolate and nougat chocolate and 31-33°C for dark chocolate when the mass enters the mixer 14.

The first stream of mass is tempered continuously in the tempering apparatus 11 after well-known procedures. In the mixer 14 the smaller first stream of mass is mixed up into the larger second stream of mass and the crystals are mixed thoroughly and homogenously out into the final mass continuously delivered from the mixer 14.

At one example the liquid mass in the tank 2 is dark chocolate with a fat content of 26%. At one production run 10% of the amount of mass is pumped by the pump 10 through the tempering apparatus 11 and 90% of the dark chocolate is pumped through the cooler 8. Approximately 35% of the total energy requirement is saved in comparison with the energy required by a traditional tempering machine. Approximately 1000 kg/hour of well-tempered dark chocolate was delivered continuously by the mixer.

At another production run milk chocolate with a fat content of 36% is in the tank 2. Then, 25% of the amount of milk chocolate is pumped by the pump 10 through the tempering apparatus 11 and 75% of the milk chocolate is pumped through cooler 8. Astonishingly is approximately 55% of the total energy requirement saved in comparison with the energy required by a traditional tempering machine. Approximately 1400 kg/hour of well-tempered milk chocolate was delivered continuously by the mixer.

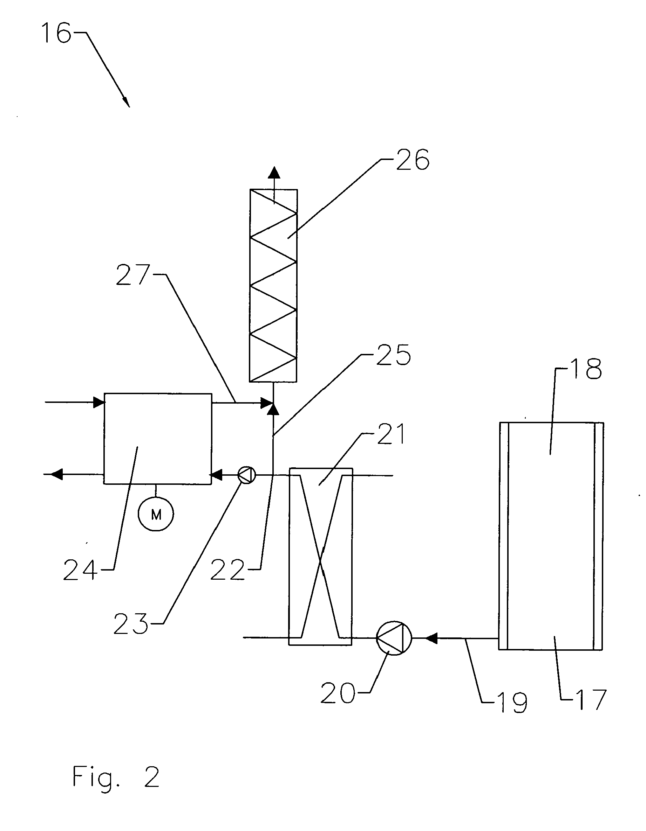

The apparatus 16 of figure 2 according to the invention is also configured for carrying out the method of the invention. A tank 17 keeps the mass 18 at a constant temperature between 40°C and 50°C. A tube 19 connects the tank 17 with a pump 20. A cooler or heat exchanger 21 is connected with the pump 20 at the inlet and with a branch 22 at the outlet. The branch 22 is connected with a pump 23 for delivering the first stream of mass to a tempering apparatus or cooler 24, and is further connected with a tube 25 for delivering the second stream directly to a static mixer 26. A tube 27 connects the tempering machine 24 with the mixer 26 for delivering tempered mass to the mixer.

The total mass is cooled in the cooler close to a temperature where crystals can be created, however the mass is still crystal-free. Via the pump 23 the first stream of mass is pumped into the tempering column 24 in an amount of typically between 10% and 40%. The first stream is tempered in the apparatus 24, so that a content of between 0,5% and 3% of crystals is created. The normal tempering settings and procedures are followed as if the tempering machine was standing alone as by the prior art. Thereby, desirable tempering curves are obtained. In the mixer the two streams of mass are mixed thoroughly together into a finally crystallized mass. The energy savings are as by the previously described embodiment, typically a few percent better.

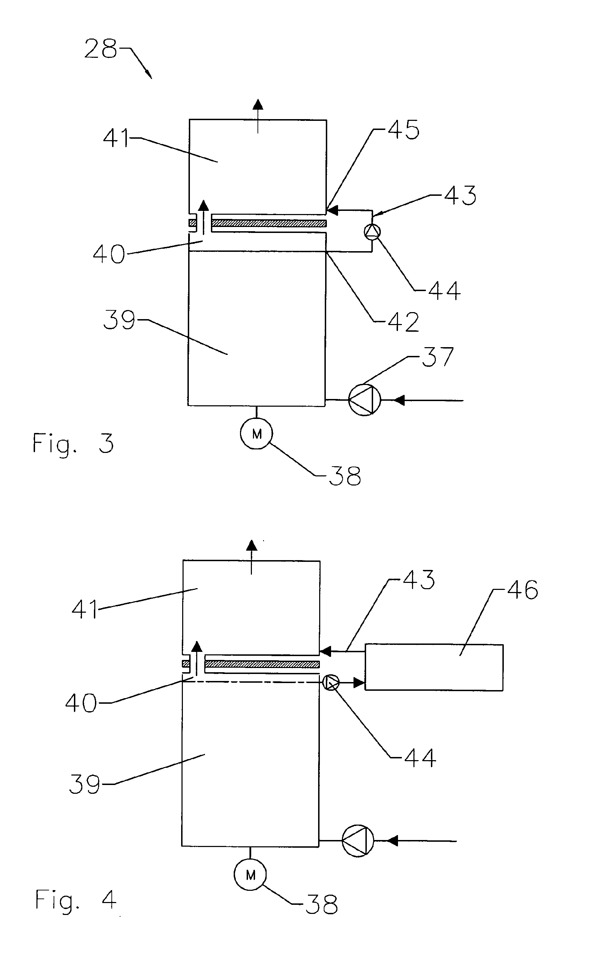

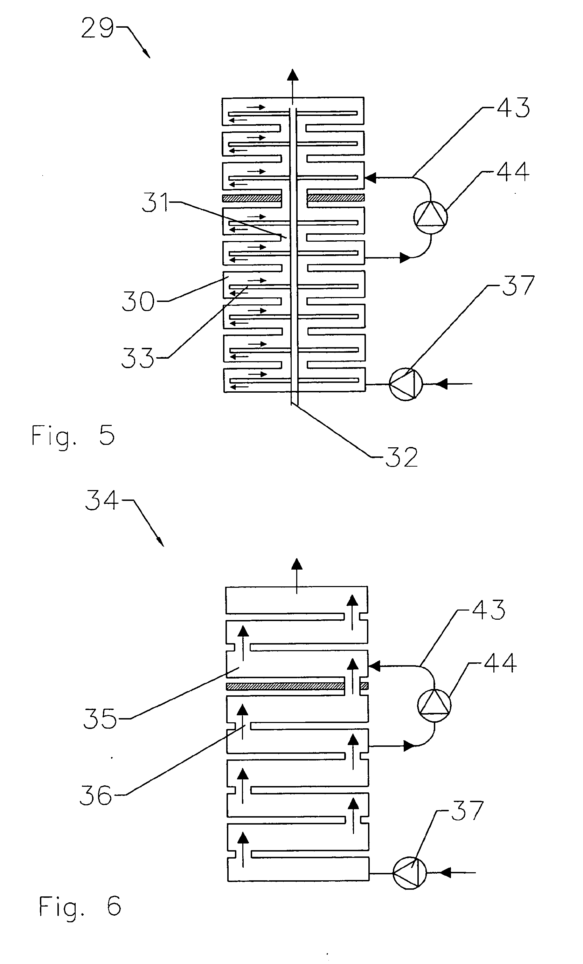

In figure 3 is disclosed an inventive embodiment of a tempering apparatus for carrying out the inventive method. The apparatus 28 constitutes of a tempering column of well-known type such as the one disclosed in figure 5 or in figure 6.

The tempering column 29 schematically disclosed in figure 5 is build up by discs chambers 30 for the chocolate and intermediary chambers for the water, which are not disclosed as they are not part of the inventive idea. All the chocolate chambers 30 are interconnected by central ring-shaped openings 31. A central shaft 32 is connected with stirring tools 33 arranged in each chocolate chamber 30.

The tempering column 34 schematically disclosed in figure 6 is build up by discs chambers 35 for the chocolate and intermediary chambers for the water. All the chocolate chambers 35 are interconnected by openings 36 arranged at the periphery. A central shaft is connected with stirring tools arranged in each chamber as in figure 5.

Via a pump 37 the chocolate mass is pumped continuously through the column 28 in figure 3 and as disclosed more detailed in figure 5 or in figure 6. A motor 38 turns the shaft 32 and the stirring tools 33 typically with 25-50 revolutions per minute.

The tempering apparatus 28 has a cooling section 39, a crystallisation section 40 and a mixing and conditioning section 41. Between the cooling section 39 and the crystallisation section 40 is arranged the inlet 42 to a conduit 43 with a pump 44. The outlet 45 of the conduit is connected with the mixing section 41.

The mass is pumped from the non-disclosed tank having a temperature of 40-50°C by the pump 37 into the cooling section 39 of tempering column 28. In the cooling section 39 the temperature of the mass is lowered so much that it is close to the temperature at which crystals can be created, however it is still free from any crystals in the mass. The pump 44 pumps the desired amount of the second stream of mass out of the tempering column and into the conduit 43. From the by-passing conduit the second stream of mass enters via the inlet 45 into the mixing section 41, still being free from crystals. The first stream of mass flow through the crystallisation section 40 at which crystals are created in the mass. From there the first stream of mass flow into the mixing section 41 and mixes up with the second stream of mass, so that the crystals are homogenously distributed out through the final mass.

At one production test with dark chocolate a continuous amount of 1000 kg/hour is delivered from the apparatus 28. Approximately 90% of the dark chocolate is by-passed in the conduit 43, meaning that this amount of chocolate is not being crystallised in the crystallisation section 40. Well-tempered dark chocolate is delivered continuously from the apparatus. The tempering index is flat and sharp in the region of 4,7-5,3, which is extremely well in comparison with the results achievable for the prior known apparatus. The total energy consumption for the apparatus is measured, both in terms of cooling energy from cold water as well as the consumption of all electrical components and pumps. The result is that 40% of the total energy consumption is saved in comparison with a prior tempering apparatus for delivering the same amount of 1000 kg/hour of well-tempered dark chocolate.

At another production test well-tempered milk chocolate is continuously delivered in an amount of 1000 kg/hour. Approximately 75% of the milk chocolate is by-passed in the conduit 43, so that this amount is not crystallised in the crystallisation section 40. The tempering index is in the region of 4,5 - 5,4, which is impressive.
The total energy consumption for the apparatus was measured, both in terms of cooling energy from cold water as well as the consumption of all electrical components and pumps. The result is that approximately 70% of the total energy consumption is saved in comparison with a prior tempering apparatus for delivering the same amount of 1000 kg/hour of well-tempered milk chocolate. The total consumed energy amount was 35 KW/hour for continuously tempering 1000kg/hour milk chocolate with the traditional tempering machine. With the machine according to the invention, the total consumed energy amount was 10 KW/hour for continuously tempering the same mass and the same amount per hour.

Tests has shown, that when the amount of the first stream of mass is between 10% and 30% of the amount of the final stream of mass, the highest possible capacity of mass is achieved for a fixed configuration of an apparatus. The energy savings are also among the greatest. The totally consumed energy for apparatus is measured to between 7,7 W/Kg/hour and 9,2 W/Kg/hour tempered dark chocolate mass or milk chocolate mass. In comparison herewith the totally consumed energy for prior art apparatuses was measured to 20-25 W/Kg/hour at the same conditions. The maximum tempered amount was between 1400 kg and 1800 kg per hour for a tempering column modified according to the inventive solution. When laid out according to the prior art the particular tempering column has a maximum capacity of tempering 1000 kg/hour of dark chocolate.

The result of the high savings in total energy consumption for the apparatus is astonishing and a great advantage for the producer, especially for factories, which have many tempering machines.

The embodiment disclosed in figure 4 is identical to the embodiment 28 disclosed in figure 3 apart from a further cooler 46 arranged in the conduit 43. Hereby is obtained a finer control with the temperature of the by-passed stream of mass before it enters into the mixing section 41. This is an advantage when the mass type dictates very accurate temperature control in the region at which no crystals are created. The crystals of the first stream of mass survive and increase further crystallisation in the mixing section 41.

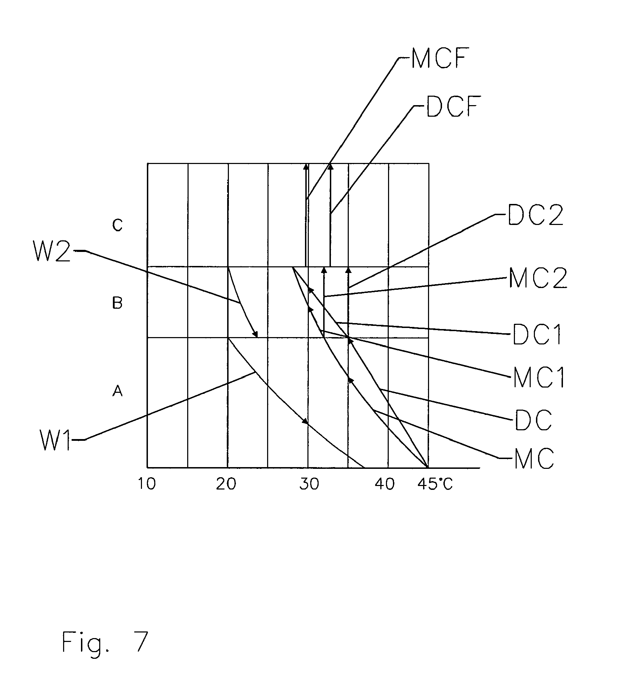

In figure 7 is disclosed to examples of temperature curves for the chocolate mass passing through the apparatus disclosed in figure 2 or in figure 3.

In stage A the total mass is cooled down, in stage B the mass has been split into the first and the second stream, and in stage C the mass has been mixed.

The first example is for a well-known type of milk chocolate. In the first stage A the milk chocolate MC is cooled down from 45°C and to 32°C. The temperature W1 of the water in the cooling chambers then rises from 20°C and to 37°C as the water flow in the opposite direction of the chocolate. The mass is then split into 33% of the first stream MC1 and 67% of the second stream MC2. In the stage B, the first stream of milk chocolate MC1 is cooled down to 28°C during crystallisation in the temper 24 of figure 2 or in the crystallisation section 40 of figure 3. The temperature W2 of the cooling water rises from 20°C and to 23,5°C in stage B as the water flow in the opposite direction of the chocolate. The temperature of the cooling surfaces of the stage B, over which surfaces the chocolate flow, is then approximately 1°C higher than the temperature of the cooling water. The temperature of the second stream of mass MC2 is kept constant at 32°C. In the stage C the two streams MC1 and MC2 is mixed and the temperature of the resulting stream MCF is 29,5°C.

The second example is for a well-known type of dark chocolate. In the first stage A the dark chocolate MD is cooled down from 45°C and to 35°C. The temperature W1 of the water in the cooling chambers then rises from 20°C and to 37°C as the water flow in the opposite direction of the chocolate. The mass is then split into 25% of the first stream DC1 and 75% of the second stream DC2. In the stage B, the first stream of dark chocolate DC1 is cooled down to 28°C during crystallisation in the temper 24 of figure 2 or in the crystallisation section 40 of figure 3. The temperature W2 of the cooling water rises from 20°C and to 23,5°C in stage B as the water flow in the opposite direction of the chocolate. The temperature of the cooling surfaces of the stage B, over which surfaces the chocolate flow, is then approximately 1°C higher than the temperature of the cooling water. The temperature of the second stream of mass DC2 is kept constant at 35°C. In the stage C the two streams DC1 and DC2 is mixed and the temperature of the resulting stream DCF is 33°C.

## Claims

1. Apparatus (1) for continuous tempering of a fat-containing, crystallisable chocolate mass, which has been heated, so that it is liquid, pumpable and free from crystals, comprising a branching means (5,22) adapted for dividing the mass into a first stream of mass and a second stream of mass so that the amount of the first stream of mass is smaller than the amount of the second stream of mass,
cooling means (8, 11, 21, 24, 39, 40, 46) adapted for cooling of the mass, so that crystals are created in the first stream of mass, and so that the second stream of mass is still being essentially free from crystals, and mixing means (14, 26, 41) adapted for mixing the first stream of mass and the second stream of mass together into one final crystallised stream of mass.

2. Apparatus according to claim 5, **characterised in, that** the cooling means (11,24,28) adapted for creating crystals in the first stream of the mass is adapted to provide cooling surface temperatures above 19 °C.

3. Apparatus according to claim 5, **characterised in, that** the branching means is a tube branch (5,22), of which a first tube (9,23) is connected with a tempering device (11,24) for crystallisation of the first stream of mass, and that a second tube (6,25) of the tube branch (5,22) being adapted for leading the second stream of mass to the mixing means (14,26).

4. Apparatus according to claim 7, **characterised in, that** the second tube (6) of the tube branch (5) is connected with a plate heat exchanger (8).

5. Apparatus according to claim 5, **characterised in, that** a cooling device (21) is arranged for cooling the mass before it flows through the branching device (22).

6. Apparatus according to claim 5, **characterised in, that** the cooling means comprises the cooling section (39) and the crystallisation section (40) of a tempering column (28), and that the branching means comprise a channel (43) connected with its inlet (42) and outlet (45) to the side of the tempering column, which channel (43) is adapted for by-passing the second stream of mass outside the crystallisation section (40).

7. Apparatus according to claim 10, **characterised in, that** the mixing means are part of the final sections (41) of the tempering column (28).
